# FASCICULE DE BREVET EUROPEEN

(11) **EP 2 861 970 B1**
(45) Date de publication et mention de la délivrance du brevet: **16.03.2016**
(21) Numéro de dépôt: 13730187.5
(22) Date de dépôt: 13.06.2013
(51) Int. Cl.: G01N 21/71, B23K 26/04, G01F 23/00, G01F 23/292, G01F 23/68

(54) **DISPOSITIF DE FOCALISATION D'UN FAISCEAU LASER PAR CAMÉRA**
VORRICHTUNG ZUM FOKUSSIEREN EINES LASERSTRAHLS MITTELS EINER KAMERA
DEVICE FOR FOCUSING A LASER BEAM BY CAMERA

(30) Priorité: 14.06.2012 BE 201200397
(43) Date de publication de la demande: 22.04.2015
(73) Titulaire: Centre de Recherches Métallurgiques asbl - Centrum voor Research in de Metallurgie vzw, 1000 Bruxelles (BE)
(72) Inventeur: MONFORT, Guy, B-4420 Montegnee (BE)
(74) Mandataire: Pronovem
(86) Numéro de dépôt international: PCT/EP2013/062292
(87) Numéro de publication internationale: WO 2013/186317

(56) Documents cités:
- EP-A1- 1 584 893
- WO-A1-2010/081807
- GB-A- 2 100 021
- JP-A- 61 181 947
- US-A- 4 029 932
- US-A- 4 986 658
- US-A1- 2003 174 325
- RAI AWADHESH K ET AL: "High temperature fiber optic laser-induced breakdown spectroscopy sensor for analysis of molten alloy constituents", REVIEW OF SCIENTIFIC INSTRUMENTS, AIP, MELVILLE, NY, US, vol. 73, no. 10, 1 octobre 2002 (2002-10-01), pages 3589-3599, XP012039425, ISSN: 0034-6748, DOI: 10.1063/1.1505101

## Description

### Objet de l'invention

La présente invention se rapporte à un dispositif de mesure de distance utilisant une caméra et principalement destiné à la focalisation d'un faisceau laser sur une surface liquide à haute température, c'est-à-dire supérieure à au moins 600°C. L'invention se rapporte également au procédé mis en oeuvre par le dispositif.

### Arrière-plan technologique et état de la technique

Lorsqu'il est nécessaire de focaliser un faisceau laser sur une surface située à une distance variable de la source, il est important de connaître cette distance avec une bonne précision.

A cet effet, on connaît toute une série de dispositifs disponibles dans le commerce. Ceux-ci sont basés sur différents principes et sont utilisables dans des gammes de distances très variables, avec une précision qui dépend à la fois du principe de mesure et des conditions dans lesquelles celle-ci a lieu.

Lorsque la surface considérée est celle d'un produit à haute température, la plupart des dispositifs existants sont inappropriés. On utilise alors généralement des méthodes de mesure sans contact basées sur différents principes optiques. Les deux plus connues sont les méthodes de triangulation et de temps de vol.

La méthode de triangulation consiste à envoyer sur la surface un faisceau lumineux dont la direction forme un certain angle, généralement assez petit, avec la perpendiculaire à cette surface. On collecte le faisceau réfléchi et, on mesure, au niveau de la surface du même capteur, la demi-distance entre celui-ci et le faisceau émis. La connaissance de l'angle du faisceau incident et de cette distance suffit à définir un triangle rectangle dont le grand côté de l'angle droit représente la distance à mesurer (la demi-distance sur le capteur entre le faisceau émis et le faisceau réfléchi étant le petit côté de l'angle droit de ce triangle rectangle).

Cette méthode peut être très précise. La précision augmente d'ailleurs avec l'angle d'incidence mais au détriment de l'encombrement du dispositif. La méthode présente cependant quelques inconvénient :
- si la température de la surface-cible est très élevée, le rayonnement propre de cette dernière peut perturber la mesure ;
- si la surface est très peu réfléchissante ou très rugueuse (diffusante), la présence de ce rayonnement peut même rendre la mesure impossible ;
- la présence de poussières ou de fumée entre le capteur et la surface à mesurer peut également altérer la mesure.

La méthode de temps de vol analyse le temps mis par une impulsion de lumière très courte pour parcourir le trajet aller et retour du dispositif de mesure à la surface. Cette méthode nécessite une électronique très rapide pour permettre la mesure de courtes distances et souffre d'inconvénients similaires à ceux de la méthode de triangulation, même si le fait d'utiliser une courte impulsion lumineuse de forte intensité permet de mieux s'affranchir du rayonnement propre de la surface.

Le document EP 1 584 893 A1 divulgue une méthode de contrôle ou de correction de l'orientation d'un faisceau de lumière laser par rapport à un corps creux, dans lequel est dirigé le faisceau laser, notamment pour une application de spectroscopie plasma induite par laser (LIBS). Afin de pouvoir détecter et corriger, de manière simple et fiable, des déviations du faisceau laser par rapport à l'orientation souhaitée dans le corps creux, il est proposé de prendre une image coaxiale au faisceau laser d'une ouverture d'entrée de lumière et/ou d'une ouverture de sortie de lumière du corps creux, respectivement d'une substance complètement incluse dans le corps creux et d'acquérir, le cas échéant corriger, respectivement ajuster, l'orientation du faisceau laser dans le corps creux à partir de la position de l'ouverture d'entrée de lumière et/ou de l'ouverture de sortie de lumière, respectivement de la surface de la substance, dans l'image.

### Buts de l'invention

Le but de la présente invention est de permettre une mesure de la distance à la surface d'un liquide, principalement un liquide porté à haute température, tout en garantissant une bonne précision ainsi qu'une meilleure immunité aux poussières et au rayonnement propre de la surface.

En particulier, cette mesure de distance doit pouvoir être combinée à un système de focalisation d'un faisceau laser de puissance afin de focaliser le laser sur ladite surface. Une application de ce dispositif est la mesure par la méthode LIBS (Laser Induced Breakdown Spectroscopy) de la composition chimique du liquide.

Enfin cette invention vise aussi une application à la mesure de niveau de produits liquides, visqueux ou pulvérulents.

### Principaux éléments caractéristiques de l'invention

Un premier aspect de la présente invention se rapporte à un dispositif pour la focalisation d'un faisceau laser sur la surface d'un produit liquide, visqueux ou pulvérulent, dont le niveau, c'est-à-dire la position verticale de la surface, est variable au cours du temps, comprenant :
- une source émettant un faisceau laser focalisable grâce à des moyens optiques sur ladite surface ;
- une buse au moins en partie cylindrique à une première extrémité, plongeant dans ledit produit et pouvant se remplir au moins partiellement de produit ;
- optionnellement un flotteur se trouvant à la surface du produit à l'intérieur de la buse ;
- un dispositif d'imagerie, fixe par rapport à la source, situé du côté d'une seconde extrémité de la buse et équipé d'une optique permettant de capter l'image entière de la surface du produit ou du flotteur à l'intérieur de la buse entre une première distance et une seconde distance, la première distance étant plus petite que la seconde distance ;
- un système de traitement d'image couplé au dispositif d'imagerie pour déterminer le diamètre d'ajustement à l'image du contour de la buse au niveau de la surface, appelé diamètre apparent de la buse ou pour déterminer le diamètre ou toute autre dimension transverse apparente du flotteur ;
- des moyens de calcul sur base de courbes d'étalonnage préétablies, successivement, de la distance entre la source laser et la surface en fonction du diamètre intérieur apparent de la buse ou de la dimension transverse apparente du flotteur et de la focalisation du faisceau laser sur la surface qui en résulte ;
- des moyens de modification de la focalisation du faisceau laser par action sur les moyens optiques en fonction du calcul précité de la focalisation adaptée à la distance calculée entre la source laser et la surface.

Selon des modalités préférées de l'invention, le dispositif comporte en outre une ou une combinaison appropriée des caractéristiques suivantes :
- les moyens optiques comprennent au moins une lentille ou un miroir dont la position variable permet de modifier la focalisation du faisceau laser ;
- le système de traitement d'image, couplé au dispositif d'imagerie, pour déterminer le diamètre intérieur apparent de la buse ou la dimension transverse apparente du flotteur comprend des moyens de mise en oeuvre d'une méthode de morphologie mathématique ou une méthode de détection de contour et d'un algorithme d'élimination des perturbations ;
- le système de traitement d'image, couplé au dispositif d'imagerie, pour déterminer le diamètre intérieur apparent de la buse ou la dimension transverse apparente du flotteur comprend des moyens de mise en oeuvre de la méthode de Shen-Castan ou de Canny-Deriche ;
- les moyens de modification de la focalisation du faisceau laser par action sur les moyens optiques en fonction du calcul précité de la focalisation adaptée à la distance calculée entre la source laser et la surface comprennent un contrôleur tel qu'un PC agissant sur un actionneur en fonction des indications d'un dispositif de contrôle de position ;
- le dispositif de contrôle de position comprend un LVDT ;
- le dispositif d'imagerie est une caméra ;
- le dispositif est adapté pour la détermination de distance lorsque le produit dont on considère la surface est un métal liquide et la buse est réalisée en matériau réfractaire ;
- le dispositif est pourvu d'un éclairage externe permettant d'obtenir un contraste suffisant entre la paroi de la buse et ladite surface ;
- le dispositif comprend un système mécanique, hydraulique ou pneumatique apte à amener la première extrémité de la buse sous la surface.

Un second aspect de la présente invention se rapporte à un procédé de focalisation d'un faisceau laser sur la surface d'un produit liquide, visqueux ou pulvérulent, dont le niveau, c'est-à-dire la position verticale de la surface, est variable au cours du temps dans un intervalle prédéterminé, utilisant un dispositif comme décrit ci-dessus, caractérisé au moins par les étapes suivantes :
- on équipe le dispositif d'imagerie d'une optique permettant de capter l'image entière de la surface du produit liquide, visqueux ou pulvérulent à l'intérieur de la buse entre les valeurs extrêmes de l'intervalle prédéterminé ;
- on plonge la buse dans le produit ;
- on capte l'image du faisceau laser réfléchi sur la surface du produit à l'intérieur de la buse ou sur la surface d'un flotteur se trouvant à la surface du produit à l'intérieur de la buse ;
- on détermine, grâce au système de traitement d'image couplé au dispositif d'imagerie, le diamètre intérieur apparent de la buse, c'est-à-dire le diamètre d'un cercle d'ajustement à l'image du contour de la buse au niveau de la surface ou encore le diamètre apparent ou une dimension transverse apparente du flotteur ;
- grâce à une courbe d'étalonnage préétablie, on associe le diamètre intérieur apparent ou la dimension apparente du flotteur mesuré sur l'image à une distance entre la source laser et la surface ;
- en fonction de cette distance calculée, et grâce à une courbe d'étalonnage préétablie, on détermine par calcul la modification de position des moyens optiques nécessaire pour focaliser le faisceau laser sur la surface ;
- on modifie la position desdits moyens optiques comme calculé à l'étape précédente.

Avantageusement, l'étape de détermination du diamètre apparent de la buse ou de la dimension transverse apparente du flotteur est réalisée en utilisant une méthode de morphologie mathématique ou une méthode de détection de contour et un algorithme d'élimination des perturbations. De préférence, la méthode mise en oeuvre est la méthode de Shen-Castan ou la méthode de Canny-Deriche.

### Brève description des figures

La figure 1 illustre schématiquement le principe du dispositif ainsi que les étapes de la détermination de la distance dans une modalité d'exécution préférée de l'invention.
La figure 2 montre un exemple de calibration d'un système de mesure selon l'invention.
La figure 3 illustre un des avantages de la méthode, à savoir une bonne immunité à la présence d'éléments perturbateurs comme des poussières ou de la fumée.

### Description détaillée de l'invention

Le principe de la méthode selon la présente invention se base sur la constatation générale qu'un objet de taille donnée générera, sur un détecteur tel qu'une caméra, une image qui paraîtra d'autant plus petite que cet objet sera placé à plus grande distance.

L'objet de l'invention est de matérialiser une figure géométrique sur un plan identique ou correspondant à celui de la surface du matériau liquide, visqueux ou pulvérulent dont on souhaite mesurer la distance et d'utiliser les caractéristiques dimensionnelles de l'image de cette figure sur le détecteur pour calculer la distance du liquide au détecteur, à l'aide d'une analyse d'image et d'un étalonnage approprié.

Plusieurs voies sont possibles pour matérialiser cette forme géométrique.

Une première variante de la méthode consiste à immerger un tube ou une buse, cylindrique par exemple, dans un liquide, éventuellement porté à très haute température (par exemple fonte liquide à 1500°C). L'intersection de la surface du métal avec le volume intérieur de la buse définit une circonférence dont le diamètre apparent de l'image sur le détecteur dépendra de la distance entre la surface du liquide et le détecteur.

Ainsi, selon cette première forme d'exécution de l'invention, le dispositif comporte une buse, qui plonge dans le liquide, le produit visqueux ou le matériau pulvérulent. Dans la suite, pour simplifier, nous parlerons uniquement d'un liquide. Ce tube est en général fixe et se remplit ou se vide en maintenant le liquide à l'intérieur au même niveau que celui situé à l'extérieur de celui-ci, selon le principe des vases communicants. Le matériau de ce tube est choisi de manière à résister au liquide dans lequel l'une de ses extrémités doit baigner. Par exemple, on choisira un matériau réfractaire si le produit est un métal liquide. Lorsque le matériau n'est pas suffisamment fluide, on prévoira un système, de préférence mécanique, hydraulique ou pneumatique, qui amène une extrémité du tube sous la surface du produit au moment de la mesure.

A l'autre extrémité du tube, une caméra ou tout autre dispositif d'imagerie approprié capte l'image de l'extrémité en contact avec le liquide dont il faut mesurer la distance ou le niveau.

On exploite le principe que cette image aura un diamètre apparent qui sera d'autant plus petit que le niveau du liquide à l'intérieur du tube sera loin de cette caméra.

Un algorithme approprié de traitement de l'image permet de déterminer le diamètre interne apparent du tube (exprimé en pixels) au niveau de la surface du produit. Cet algorithme peut être basé sur des méthodes de morphologie mathématique, des méthodes de détection de contour (Shen-Castan, Canny-Deriche, etc.) ou toute autre méthode d'analyse d'image appropriée.

Un étalonnage préalable reliera le diamètre apparent mesuré sur l'image à la distance effective à déterminer.

Comme le contraste entre la paroi du tube et le liquide est utilisé pour déterminer le diamètre apparent du tube, le rayonnement propre du liquide favorise ledit contraste et devient donc un avantage plutôt qu'un inconvénient pour la mesure. Au cas où ce rayonnement est insuffisant, un éclairage extérieur peut être utilisé.

Une autre variante de la méthode selon l'invention consiste à déposer un flotteur de forme géométrique, circulaire par exemple, à la surface du liquide. Ce flotteur sera idéalement contenu dans un espace, délimité par exemple par une buse immergée comme celle décrite ci-dessus, qui assurera que le flotteur reste en permanence dans le champ du détecteur (caméra). Le flotteur pourra avoir des caractéristiques de couleur, de texture ou de réflectivité très différentes du liquide lui-même. Ces caractéristiques permettront d'en déterminer les contours par analyse d'image et de déduire la distance à partir des dimensions apparentes de ces contours. Cette dernière méthode est surtout utile pour des liquides transparents à basse température qui n'émettent donc pas (beaucoup) de rayonnement propre susceptible d'être capté par le détecteur. Si l'on apporte un éclairage extérieur, la lumière générée va traverser le liquide mais pourra être réfléchie par le flotteur et ainsi assurer un contraste suffisant pour un traitement d'image visant à calculer les dimensions apparentes du flotteur, qui elles-mêmes serviront à déterminer la distance liquide-caméra.

Une autre variante encore de l'invention consiste en la création à la surface du liquide d'un spot lumineux, à l'aide d'une source de lumière et d'une optique appropriée. Cette variante sera d'application notamment pour les cas où la présence d'une buse immergée partiellement dans le liquide n'est pas souhaitable ou pas possible techniquement. Ledit spot pourra avoir une forme circulaire ou générer toute autre figure telle qu'une grille de points, un ensemble de lignes, etc. Des dispositifs tels que les DOE (*Diffractive Optical Elements)* sont couramment utilisés pour créer de telles figures. La source lumineuse pourra avantageusement être choisie dans une gamme de longueurs d'onde peu ou pas présente dans le rayonnement émis par le liquide dont on veut mesurer la distance. Par exemple, un corps chauffé à 1500°C émet assez bien de lumière dans le rouge, un peu moins dans le vert et très peu dans le bleu. En choisissant une source (laser ou LED) émettant à 445 nm par exemple, une caméra couleur pourra aisément différencier la lumière émise par la source de celle correspondant au rayonnement propre du liquide. De plus, un filtre en longueur d'onde pourra aussi augmenter le contraste.

Dans le cas où la figure projetée est un cercle ou une surface éclairée uniformément, la mesure est particulièrement insensible aux poussières qui devront être très nombreuses avant de masquer totalement le contour dont les dimensions apparentes seront utilisées pour calculer la distance. Dans le cas où la figure est constituée de deux ou plusieurs points lumineux, l'intensité lumineuse sera concentrée sur de petites surfaces et le contraste avec le rayonnement propre du liquide pourra être amélioré. La distance apparente entre les points servira au calcul de la distance détecteur-liquide.

### Description de formes d'exécution préférées de l'invention

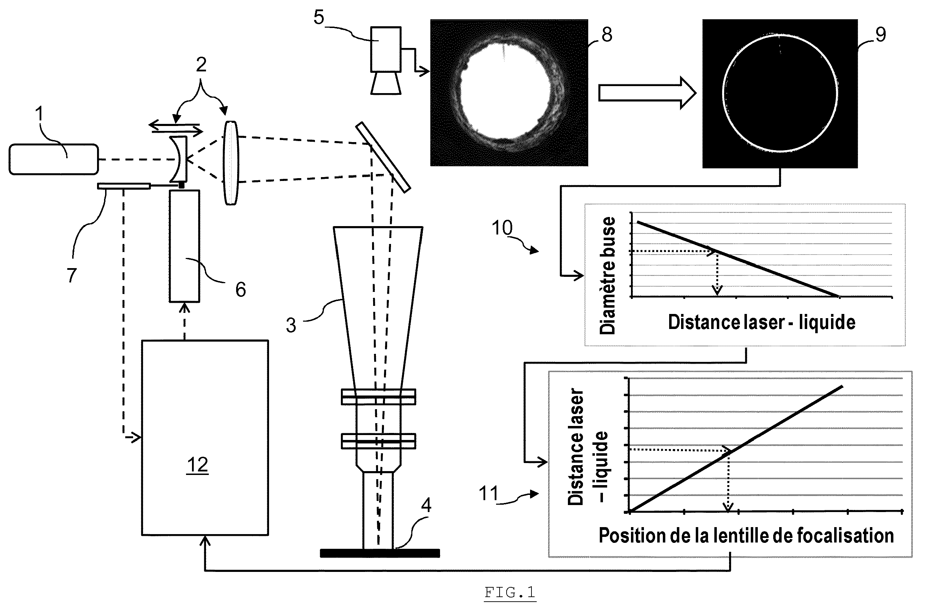

Le dispositif proposé selon une forme d'exécution préférée de l'invention est décrit à la figure 1. Il permet de focaliser le faisceau d'un laser ou d'une autre source de rayonnement électromagnétique, tel qu'un faisceau d'ondes térahertz, sur la surface d'un liquide dont la distance audit laser peut varier.

Le laser 1 émet un rayonnement qui est conditionné par une optique 2 de manière à en permettre la focalisation sur une surface 4 dont la position verticale peut changer au cours du temps. Pour mesurer la distance entre le laser 1 et la surface 4 du liquide, on utilise une buse 3 dont au moins la partie terminale est cylindrique. A l'aide d'une caméra 5, ou de tout autre dispositif de prise ou d'enregistrement d'image, située à une distance connue du laser 1, on capte l'image 8 de la surface liquide 4 à l'intérieur de la buse 3. Selon la distance entre la caméra 5 et la surface liquide 4, le diamètre intérieur apparent de la buse 3 sera différent et variable : il paraîtra plus petit si la distance est plus longue et plus grand si la distance est plus courte.

En utilisant un algorithme de traitement d'image approprié, on détermine l'image du contour de la buse 9 et on calcule le diamètre du cercle correspondant. A l'aide d'une droite d'étalonnage préalablement établie 10, on en déduit la distance entre la caméra et la surface du liquide et donc la distance laser 1 - surface 4. A partir de cette donnée, on modifie le système de focalisation du faisceau laser, généralement en modifiant la position d'une lentille. Cette action se fait à l'aide d'un actionneur 6 commandé par un contrôleur 12 et on contrôle la position de la lentille 2 à l'aide d'un dispositif adapté tel qu'un capteur électrique passif de type LVDT 7 *(Linear Variable Differential Transformer).* Pour amener le point focal à la bonne position, on utilise la distance laser 1 - surface 4 que l'on a mesurée et on en déduit, à l'aide d'une courbe de calibration 11 établie préalablement, la position à laquelle on doit amener la lentille.

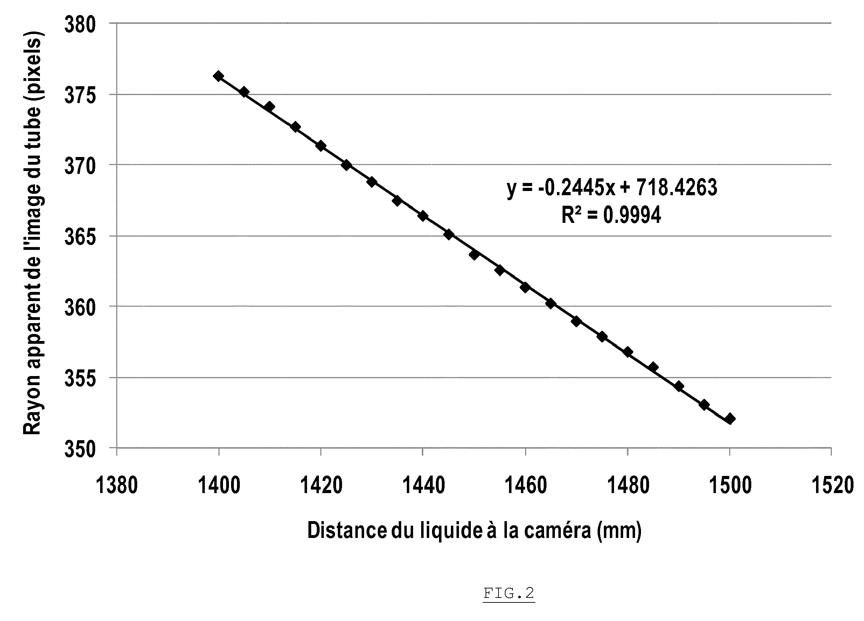

La figure 2 montre un exemple de l'étalonnage précité 10 par droite de régression. Le diamètre interne apparent du tube (exprimé en pixels) est obtenu en utilisant une méthode de morphologie mathématique. La précision obtenue sur cet exemple est : erreur absolue moyenne : 0,66 mm ; erreur absolue max. : 1,71 mm.

### Avantages de la méthode

Les avantages de la présente méthode sont principalement :
- la simplicité de fonctionnement puisqu'il suffit d'un tube fabriqué dans un matériau approprié et d'une caméra ;
- l'adaptation facile à différentes distances (ou à une gamme de distances) puisqu'il suffit de choisir l'optique de la caméra afin que le diamètre de la buse apparaisse complètement dans l'image pour la distance la plus petite à mesurer, c'est-à-dire correspondant à la plus proche distance de travail. Dans ces conditions, on obtient une résolution optimale sur la mesure du diamètre (il y a plus de pixels pour représenter un diamètre donné et donc chaque pixel correspond à une plus petite longueur) ;
- une précision adaptable dans une certaine mesure, puisqu'on peut choisir une caméra avec un plus ou moins grand nombre de pixels. Ce nombre détermine en grande partie la précision de la mesure ;
- une grande immunité aux poussières et perturbations qui peuvent être largement éliminées par le traitement de l'image ;
- l'utilisation possible sur des liquides à haute température sans influence néfaste de leur rayonnement propre puisque celui-ci peut précisément être utilisé afin d'augmenter le contraste de la mesure.

On notera que si le document EP 1 584 893 propose une méthode pour focaliser et plus exactement orienter un faisceau laser à la surface d'un liquide, basée sur le diamètre apparent de la buse à hauteur du liquide, la présente méthode s'en distingue dans la mesure où, dans ce document, on ne propose aucun traitement d'image ou autres moyens permettant de calculer la distance entre la source laser et la surface du liquide.

La méthode de la présente invention se distingue en particulier de celle enseignée dans ce document par les points suivantes :
- des méthodes spécifiques sont données pour calculer le diamètre apparent de la buse ;
- un étalonnage est décrit, qui permet de calculer les distances à partir de ce diamètre ;
- la méthode n'utilise que le diamètre de sortie de la buse, et l'unique mise au point sur celui-ci, contrairement à EP 1 584 893 qui a besoin du rapport des diamètres d'entrée et de sortie. Il en résulte dans ce cas les désavantages importants suivantes :
   - il faut que le diamètre d'entrée, qui apparaît toujours plus grand puisque plus proche, soit entièrement contenu dans l'image. Pour des distance de mesure très grandes, le diamètre de sortie apparent sera donc beaucoup plus petit que la taille de l'image et donc la résolution sera moindre ;
   - dans le cas de grandes distances de travail, il est pratiquement impossible d'obtenir une mise au point correcte de l'image du diamètre d'entrée et, en même temps, du diamètre de sortie de la buse. Dans ce cas, une imprécision supplémentaire apparaît dans la mesure d'un des diamètres (celui qui est le plus flou) : ceci se traduit par une mesure moins précise de la distance.

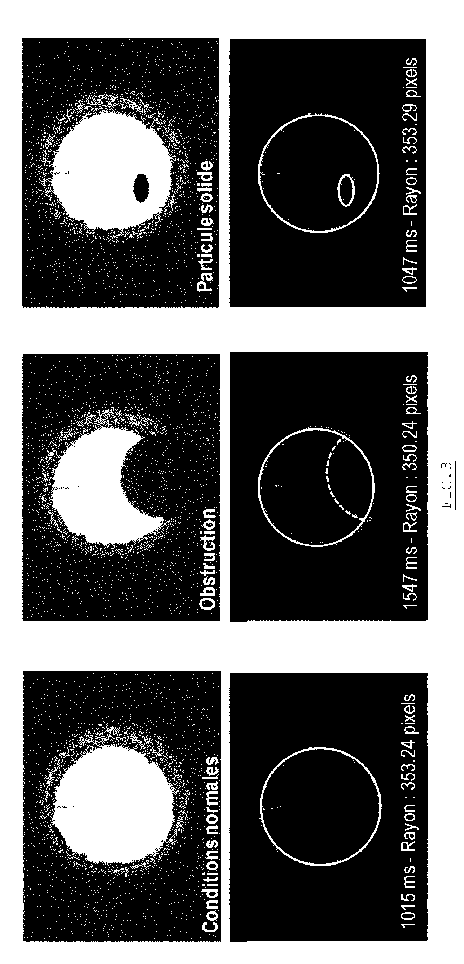

La figure 3 illustre la relative insensibilité de la méthode à des perturbations mêmes importantes.

La partie gauche de la figure 3 montre à titre d'exemple l'aspect de l'intérieur d'une buse en réfractaire de 1,5 mètre de long plongeant dans de la fonte en fusion. Dans des conditions normales, un traitement d'images basé sur des méthodes de morphologie mathématique ainsi que sur un algorithme d'élimination des perturbations calcule, pour cet exemple, un diamètre moyen de 353,24 pixels. Les images de la partie centrale de la figure 3 montrent le résultat du calcul de ce même diamètre lorsqu'on simule une masse obscure obstruant la buse (masse solidifiée, défaut dans la buse, etc.). Malgré l'importance du défaut, le calcul du diamètre présente moins d'un pourcent d'erreur au prix d'un temps de calcul plus important de 50%. Néanmoins, pour de nombreuses applications, ce temps de calcul est tout à fait acceptable et reste inférieur à 2 secondes sur un PC Intel Core 2 Duo cadencé à 2,4 GHz. Enfin, les images de droite montrent l'effet d'une grosse particule présente et totalement comprise à l'intérieur de la buse. Dans ce cas, l'erreur de calcul est négligeable et le temps de calcul n'augmente pratiquement pas.

### Liste des symboles de référence

- 1: Source laser
- 2: Lentille de focalisation
- 3: Buse
- 4: Surface liquide
- 5: Caméra
- 6: Actionneur
- 7: LVDT
- 8: Image du faisceau laser réfléchi
- 9: Image du contour interne de la buse
- 10: Etalonnage diamètre buse - distance
- 11: Etalonnage distance - position lentille
- 12: Contrôleur

## Revendications

1. Dispositif pour la focalisation d'un faisceau laser sur la surface (4) d'un produit liquide, visqueux ou pulvérulent, dont le niveau, c'est-à-dire la position verticale de la surface, est variable au cours du temps, comprenant :
- une source (1) émettant un faisceau laser focalisable grâce à des moyens optiques (2) sur ladite surface (4) ;
- une buse (3) au moins en partie cylindrique à une première extrémité, plongeant dans ledit produit et pouvant se remplir au moins partiellement de produit ;
- optionnellement un flotteur se trouvant à la surface (4) du produit à l'intérieur de la buse (3) ;
- un dispositif d'imagerie (5), fixe par rapport à la source (1), situé du côté d'une seconde extrémité de la buse (3) et équipé d'une optique permettant de capter l'image entière de la surface (4) du produit ou du flotteur à l'intérieur de la buse (3) entre une première distance et une seconde distance, la première distance étant plus petite que la seconde distance ;
- un système de traitement d'image couplé au dispositif d'imagerie (5) pour déterminer le diamètre d'un cercle d'ajustement à l'image du contour de la buse (3) au niveau de la surface (4), appelé diamètre apparent de la buse (3) ou pour déterminer le diamètre ou toute autre dimension transverse apparente du flotteur ;
- des moyens de calcul sur base de courbes d'étalonnage préétablies, successivement, de la distance entre la source laser (1) et la surface (4) en fonction du diamètre intérieur apparent de la buse (3) ou de la dimension transverse apparente du flotteur et de la focalisation du faisceau laser sur la surface (4) qui en résulte ;
- des moyens de modification (6, 7, 12) de la focalisation du faisceau laser par action sur les moyens optiques (2) en fonction du calcul précité de la focalisation adaptée à la distance calculée entre la source laser (1) et la surface (4).

2. Dispositif selon la revendication 1, **caractérisé en ce que** les moyens optiques (2) comprennent au moins une lentille ou un miroir dont la position variable permet de modifier la focalisation du faisceau laser.

3. Dispositif selon la revendication 1, **caractérisé en ce que** le système de traitement d'image, couplé au dispositif d'imagerie (5), pour déterminer le diamètre intérieur apparent de la buse (3) ou la dimension transverse apparente du flotteur comprend des moyens de mise en oeuvre d'une méthode de morphologie mathématique ou une méthode de détection de contour et d'un algorithme d'élimination des perturbations.

4. Dispositif selon la revendication 3, **caractérisé en ce que** le système de traitement d'image, couplé au dispositif d'imagerie (5), pour déterminer le diamètre intérieur apparent de la buse (3) ou la dimension transverse apparente du flotteur comprend des moyens de mise en oeuvre de la méthode de Shen-Castan ou de la méthode de Canny-Deriche.

5. Dispositif selon la revendication 1, **caractérisé en ce que** les moyens de modification de la focalisation du faisceau laser par action sur les moyens optiques (2) en fonction du calcul précité de la focalisation adaptée à la distance calculée entre la source laser (1) et la surface (4) comprennent un contrôleur (12) tel qu'un PC agissant sur un actionneur (6) en fonction des indications d'un dispositif de contrôle de position (7).

6. Dispositif selon la revendication 5, **caractérisé en ce que** le dispositif de contrôle de position (7) comprend un LVDT.

7. Dispositif selon la revendication 1, **caractérisé en ce que** le dispositif d'imagerie (5) est une caméra.

8. Dispositif selon la revendication 1, **caractérisé en ce que** la buse (3) est réalisée en matériau réfractaire.

9. Dispositif selon la revendication 1, **caractérisé en ce qu'**il est pourvu d'un éclairage externe permettant d'obtenir un contraste suffisant entre la paroi de la buse (3) et ladite surface (4).

10. Dispositif selon la revendication 1, **caractérisé en ce qu'**il comprend un système mécanique, hydraulique ou pneumatique apte à amener la première extrémité de la buse (3) sous la surface (4).

11. Procédé de focalisation d'un faisceau laser sur la surface (4) d'un produit liquide, visqueux ou pulvérulent, dont le niveau, c'est-à-dire la position verticale de la surface, est variable au cours du temps dans un intervalle prédéterminé, utilisant un dispositif selon l'une quelconque des revendications précédentes, caractérisé au moins par les étapes suivantes :
- on équipe le dispositif d'imagerie (5) d'une optique permettant de capter l'image entière de la surface (4) du produit liquide, visqueux ou pulvérulent à l'intérieur de la buse (3) entre les valeurs extrêmes de l'intervalle prédéterminé ;
- on plonge la buse (3) dans le produit ;
- on capte l'image (8) du faisceau laser réfléchi sur la surface (4) du produit à l'intérieur de la buse (3) ou sur la surface d'un flotteur se trouvant à la surface du produit à l'intérieur de la buse ;
- on détermine, grâce au système de traitement d'image couplé au dispositif d'imagerie (5), le diamètre intérieur apparent de la buse, c'est-à-dire le diamètre d'un cercle d'ajustement à l'image du contour de la buse (3) au niveau de la surface (4) ou encore le diamètre apparent ou une dimension transverse apparente du flotteur ;
- grâce à une courbe d'étalonnage préétablie (10), on associe le diamètre intérieur apparent ou la dimension apparente du flotteur mesuré sur l'image à une distance entre la source laser (1) et la surface (4) ;
- en fonction de cette distance calculée et grâce à une courbe d'étalonnage préétablie (11), on détermine par calcul la modification de position des moyens optiques (2) nécessaire pour focaliser le faisceau laser sur la surface (4) ;
- on modifie la position desdits moyens optiques (2) comme calculé à l'étape précédente.

12. Procédé selon la revendication 11, **caractérisé en ce que** l'étape de détermination du diamètre apparent de la buse (3) ou de la dimension transverse apparente du flotteur est réalisée en utilisant une méthode de morphologie mathématique ou une méthode de détection de contour et un algorithme d'élimination des perturbations.

13. Procédé selon la revendication 12, **caractérisée en ce que** la méthode mise en oeuvre est la méthode de Shen-Castan ou la méthode de Canny-Deriche.

## Patentansprüche

1. Vorrichtung zur Fokussierung eines Laserstrahls auf die Oberfläche (4) eines flüssigen, viskosen oder pulverförmigen Produkts, deren Ebene, das heißt, die vertikale Position der Oberfläche, im Laufe der Zeit variabel ist, umfassend:
- eine Quelle (1), die einen dank optischer Mittel (2) auf die Oberfläche (4) fokussierbaren Laserstrahl sendet,
- eine mindestens zum Teil an einem ersten Ende zylindrische Düse (3), die in das Produkt taucht und sich mindestens zum Teil mit Produkt füllen kann,
- optional einen Schwimmer, der sich auf der Oberfläche (4) des Produkts im Innern der Düse (3) befindet,
- eine im Verhältnis zur Quelle (1) feste bildgebende Vorrichtung (5), die sich auf der Seite eines zweiten Endes der Düse (3) befindet und mit einer Optik ausgestattet ist, die erlaubt, das vollständige Bild der Oberfläche (4) des Produkts oder des Schwimmers im Innern der Düse (3) zwischen einem ersten Abstand und einem zweiten Abstand aufzunehmen, wobei der erste Abstand kleiner als der zweite Abstand ist,
- ein an die bildgebende Vorrichtung (5) gekoppeltes Bildverarbeitungssystem zur Bestimmung des Durchmessers eines Justierkreises an das Bild der Kontur der Düse (3) auf Ebene der Oberfläche (4), als offensichtlicher Durchmesser der Düse (3) bezeichnet, oder zur Bestimmung des Durchmessers oder jeder anderen offensichtlichen transversen Größe des Schwimmers,
- Mittel zur aufeinanderfolgenden Berechnung auf der Basis von vorbestimmten Eichungskurven des Abstands zwischen der Laserquelle (1) und der Oberfläche (4) in Abhängigkeit vom offensichtlichen Innendurchmesser der Düse (3) oder von der offensichtlichen transversen Größe des Schwimmers und von der sich daraus ergebenden Fokussierung des Laserstrahls auf die Oberfläche (4),
- Änderungsmittel (6, 7, 12) der Fokussierung des Laserstrahls durch Betätigen der Optikmittel (2) in Abhängigkeit von der vorgenannten Berechnung des an den zwischen der Laserquelle (1) und der Oberfläche (4) berechneten Fokussierungsabstands.

2. Vorrichtung nach Anspruch 1, **dadurch gekennzeichnet, dass** die Optikmittel (2) mindestens eine Linse oder einen Spiegel umfassen, deren variable Position das Ändern der Fokussierung des Laserstrahls erlaubt.

3. Vorrichtung nach Anspruch 1, **dadurch gekennzeichnet, dass** das an die bildgebende Vorrichtung (5) gekoppelte Bildverarbeitungssystem zur Bestimmung des offensichtlichen Innendurchmessers der Düse (3) oder der offensichtlichen transverse Größe des Schwimmers Umsetzungsmittel einer mathematischen Morphologiemethode oder einer Konturdetektionsmethode und eines Störungsbeseitigungsalgorithmus umfasst.

4. Vorrichtung nach Anspruch 3, **dadurch gekennzeichnet, dass** das an die bildgebende Vorrichtung (5) gekoppelte Bildverarbeitungssystem zur Bestimmung des offensichtlichen Innendurchmessers der Düse (3) oder der offensichtlichen transverse Größe des Schwimmers Umsetzungsmittel der Shen-Castan-Methode oder der Canny-Deriche-Methode umfasst.

5. Vorrichtung nach Anspruch 1, **dadurch gekennzeichnet, dass** die Änderungsmittel der Fokussierung des Laserstrahls durch Betätigen der Optikmittel (2) in Abhängigkeit von der vorgenannten Berechnung des an den zwischen der Laserquelle (1) und der Oberfläche (4) berechneten Fokussierungsabstands einen Controller (12) wie einen PC umfassen, der in Abhängigkeit der Angaben einer Positionskontrollvorrichtung (7) einen Aktuator (6) betätigt.

6. Vorrichtung nach Anspruch 5, **dadurch gekennzeichnet, dass** die Positionskontrollvorrichtung (7) einen LVDT umfasst.

7. Vorrichtung nach Anspruch 1, **dadurch gekennzeichnet, dass** die bildgebende Vorrichtung (5) eine Kamera ist.

8. Vorrichtung nach Anspruch 1, **dadurch gekennzeichnet, dass** die Düse (3) aus feuerfestem Material ist.

9. Vorrichtung nach Anspruch 1, **dadurch gekennzeichnet, dass** sie mit einer äußeren Beleuchtung ausgestattet ist, die erlaubt, einen ausreichenden Kontrast zwischen der Wand der Düse (3) und der Oberfläche (4) zu erhalten.

10. Vorrichtung nach Anspruch 1, **dadurch gekennzeichnet, dass** sie ein mechanisches, hydraulisches oder pneumatisches System umfasst, das imstande ist, das erste Ende der Düse (3) unter die Oberfläche (4) zu führen.

11. Verfahren zur Fokussierung eines Laserstrahls auf die Oberfläche (4) eines flüssigen, viskosen oder pulverförmigen Produkts, deren Ebene, das heißt, die vertikale Position der Oberfläche, im Laufe der Zeit in einem vorbestimmten Intervall variabel ist, das eine Vorrichtung nach einem der vorangehenden Ansprüche verwendet, gekennzeichnet mindestens durch die folgenden Schritte:
- Ausstatten der bildgebenden Vorrichtung (5) mit einer Optik, die erlaubt, das gesamte Bild der Oberfläche (4) des flüssigen, viskosen oder pulverförmigen Produkts im Innern der Düse (3) zwischen den Extremwerten des vorbestimmten Intervalls zu erfassen,
- Eintauchen der Düse (3) in das Produkt,
- Erfassen des Bilds (8) des auf der Oberfläche (4) des Produkts im Innern der Düse (3) oder auf der Oberfläche eines sich auf der Oberfläche des Produkts im Innern der Düse befindenden Schwimmers reflektierten Laserstrahls,
- Bestimmen, mit Hilfe des an die bildgebende Vorrichtung (5) gekoppelten Bildverarbeitungssystems, des offensichtlichen Innendurchmessers der Düse, das heißt, eines Justierkreises an das Bild der Kontur der Düse (3) auf Ebene der Oberfläche (4) oder auch des offensichtlichen Durchmessers oder einer offensichtlichen transversen Größe des Schwimmers,
- Zuordnen, mit Hilfe einer vorbestimmten Eichungskurve (10), des offensichtlichen Innendurchmessers oder der offensichtlichen Größe des Schwimmers, gemessen auf dem Bild in einem Abstand zwischen der Laserquelle (1) und der Oberfläche (4),
- Bestimmen, in Abhängigkeit von diesem berechneten Abstand und mit Hilfe einer vorbestimmten Eichungskurve (11), durch Berechnung der für die Fokussierung des Laserstrahls auf die Oberfläche (4) notwendigen Positionsänderung der Optikmittel (2),
- Ändern der Position der Optikmittel (2), wie im vorangehenden Schritt berechnet.

12. Verfahren nach Anspruch 11, **dadurch gekennzeichnet, dass** der Bestimmungsschritt des offensichtlichen Durchmessers der Düse (3) oder der offensichtlichen transversen Größe des Schwimmers bei Verwendung einer mathematischen Morphologiemethode oder einer Konturdetektionsmethode und eines Störungsbeseitigungsalgorithmus durchgeführt wird.

13. Verfahren nach Anspruch 12, **dadurch gekennzeichnet, dass** die angewendete Methode die Shen-Castan-Methode oder die Canny-Deriche-Methode ist.

## Claims

1. A device for focusing a laser beam on the surface (4) of a liquid, viscous or powdery product, whose level, i.e. the vertical position of the surface, varies over time, comprising:
- a source (1) emitting a focusable laser beam using optical means (2) on said surface (4);
- a nozzle (3) at least partially cylindrical at a first end, being submerged in said product and able to fill at least partially with product;
- optionally, a float located on the surface (4) of the product inside the nozzle (3);
- an imaging device (5), stationary relative to the source (1), situated on the side of a second end of the nozzle (3) and equipped with an optic allowing to capture the entire image of the surface (4) of the product or the float inside the nozzle (3) between a first distance and a second distance, the first distance being smaller than the second distance;
- an image-processing system coupled to the imaging device (5) to determine the diameter of a circle for adjustment to the image of the contour of the nozzle (3) at the level of the surface (4), called apparent diameter of the nozzle (3), or to determine the diameter or any other apparent transverse dimension of the float;
- means for calculating, based on pre-established calibration curves, successively, the distance between the laser source (1) and the surface (4) as a function of the apparent inner diameter of the nozzle (3) or the apparent transverse dimension of the float and the focusing of the laser beam on the surface (4) resulting therefrom;
- means (6, 7, 12) for modifying the focus of the laser beam by acting on the optical means (2) as a function of the aforementioned calculation of the focus adapted to the distance calculated between the laser source (1) and the surface (4).

2. The device according to Claim 1, **characterized in that** the optical means (2) comprise at least one lens or mirror whose variable position allows to modify the focus of the laser beam.

3. The device according to Claim 1, **characterized in that** the image-processing system, coupled to the imaging device (5), for determining the apparent inner diameter of the nozzle (3) or the apparent transverse dimension of the float comprises means for implementing a mathematical morphology method or a contour-detection method and a disruption-elimination algorithm.

4. The device according to Claim 3, **characterized in that** the image-processing system, coupled to the imaging device (5), to determine the apparent inner diameter of the nozzle (3) or the apparent transverse dimension of the float comprises means for implementing the Shen-Castan method or the Canny-Deriche method.

5. The device according to Claim 1, **characterized in that** the means for modifying the focus of the laser beam by acting on the optical means (2) as a function of the aforementioned calculation of the focus adapted to the distance calculated between the laser source (1) and the surface (4) comprise a controller (12), such as a PC, acting on an actuator (6) as a function of the indications of a position-control device (7).

6. The device according to Claim 5, **characterized in that** the position-control device (7) comprises a LVDT.

7. The device according to Claim 1, **characterized in that** the imaging device (5) is a camera.

8. The device according to Claim 1, **characterized in that** the nozzle (3) is made of a refractory material.

9. The device according to Claim 1, **characterized in that** it is provided with an external light allowing to obtain sufficient contrast between the wall of the nozzle (3) and said surface (4).

10. The device according to Claim 1, **characterized in that** it comprises a mechanical, hydraulic or pneumatic system able to bring the first end of the nozzle (3) below the surface (4).

11. A method for focusing a laser beam on the surface (4) of a liquid, viscous or powdery product, whose level, i.e. the vertical position of the surface, varies over time within a predetermined interval, using a device according to any one of the preceding claims, characterized at least by the following steps:
- the imaging device (5) is equipped with an optic allowing to capture the entire image of the surface (4) of the liquid, viscous or powdery product inside the nozzle (3) between the extreme values of the predetermined interval;
- the nozzle (3) is submerged in the product;
- the image (8) of the laser beam reflected is captured on the surface (4) of the product inside the nozzle (3) or on the surface of a float located at the surface of the product inside the nozzle;
- the image-processing system coupled to the imaging device (5) is used to determine the apparent inner diameter of the nozzle, i.e. the diameter of a circle for adjustment to the image of the contour of the nozzle (3) at the surface (4), or even the apparent diameter or an apparent transverse dimension of the float;
- owing to a pre-established calibration curve (10), the apparent inner diameter or the apparent dimension of the float measured on the image is associated with a distance between the laser source (1) and the surface (4);
- as a function of this calculated distance and owing to a pre-established calibration curve (11), the change of position of the optical means (2) necessary to focus the laser beam on the surface (4) is determined by calculation;
- the position of said optical means (2) is modified as calculated in the previous step.

12. The method according to Claim 11, **characterized in that** the step for determining the apparent diameter of the nozzle (3) or the apparent transverse dimension of the float is carried out by using a mathematical morphology method or a contour-detection method and a disruption-elimination algorithm.

13. The method according to Claim 12, **characterized in that** the method implemented is the Shen-Castan method or the Canny-Deriche method.
